# EUROPEAN PATENT APPLICATION

(11) **EP 1 610 445 A1**
(43) Date of publication of application: **28.12.2005**
(21) Application number: 04787875.6
(22) Date of filing: 10.09.2004
(51) Int. Cl.: H02K 15/12

(54) **DEVICE AND METHOD FOR MANUFACTURE OF ROTATING ELECTRIC MACHINE**

(30) Priority: 10.09.2003 JP 2003318948
(71) Applicant: AISIN AW CO., LTD., Anjo-shi, Aichi 444-1192 (JP)
(72) Inventor: Kimura, Hideaki, Anjo-shi, Aichi 4441192 (JP); KAWASAKI, Yoshiyuki, Anjo-shi, Aichi 4441192; (JP); KUROYANAGI, Tooru, Anjo-shi, Aichi 4441192; (JP); Asaoka, Nobuyuki, AW Maintenance Co. Inc., Anjo-shi, Aichi 4441213 (JP)
(74) Representative: TBK-Patent
(86) International application number: PCT/JP2004/013235
(87) International publication number: WO 2005/027320

(57) **Abstract**

A rotary electric machine-manufacturing apparatus utilized to implement a process of infiltrating varnish into wire-wound coils of a rotary electric machine, and of curing the varnish, an apparatus includes a rotator 2 supporting a work S attached with the wire-wound coils Sc and rotating the work; and a high-frequency power supply device supplying electric power to the wire-wound coils. It is thus possible to support and heat up the work without having devices that surround the work S, thereby positioning a varnish dropping-infiltrating device 6 appropriately. Further, there is no need to change a stage as conventional heat-up processes with an oven or a hot blast-circulating furnace did, and an entire process from pre-drying to curing can be implemented at a single stage.

## Description

### TECHNICAL FIELD

This invention relates to manufacturing a rotary electric machine such as an electric motor, a generator and an electric motor-generator. Specifically, this invention pertains to a technology fixing, by curing infiltrated varnish, wire-wound coils of a rotary electric machine.

### BACKGROUND ART

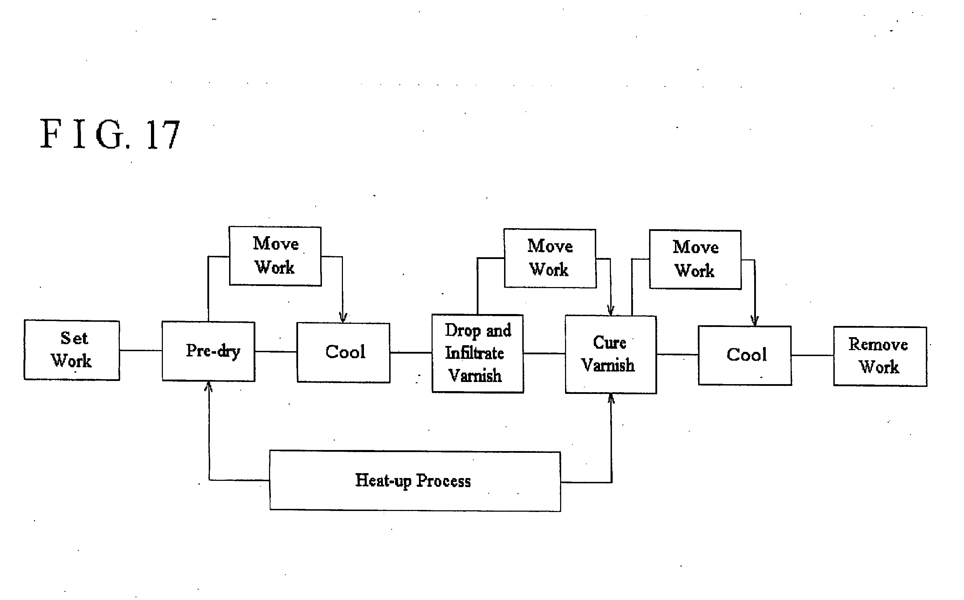

In a process of manufacturing, for example a stator, of a rotary electric machine such as an electric motor and a generator, a varnish-infiltrating process exists by which a varnish is applied to wire-wound coils and is then cured, in such a manner as to reinforce an insulating performance of wire-wound coils inserted into slots of such a stator, and to enhance their anti-vibration characteristics, their oil resistance, their chemical resistance, and their heat-radiating performance. In this varnish-infiltrating process, aside from a varnish-dropping process, there are processes of pre-drying, gelating, and curing, as processes accompanying a heat-up process for a pre-processing and for an after-processing. These processes of pre-drying, gelating and curing are illustrated in a processing flowchart in Fig. 17. In the varnish-infiltrating process, a varnish dropping-infiltrating treatment is performed, for the purpose of preventing a varnish from being attached to the inside and outside of a core, so as to drop a varnish onto only coil ends and portions that stand up from slots while a work is being rotated. Among the processes accompanying the heat-up process, there are processes of pre-drying, in which moisture is removed and a degree of coil stress is modified, and of curing, in which, in order to prevent a varnish from weeping, a varnish is cured or hardened while a work is being rotated. As a method of heating up through these processes, there is a method according to which an oven or a hot blast-circulating furnace is employed.

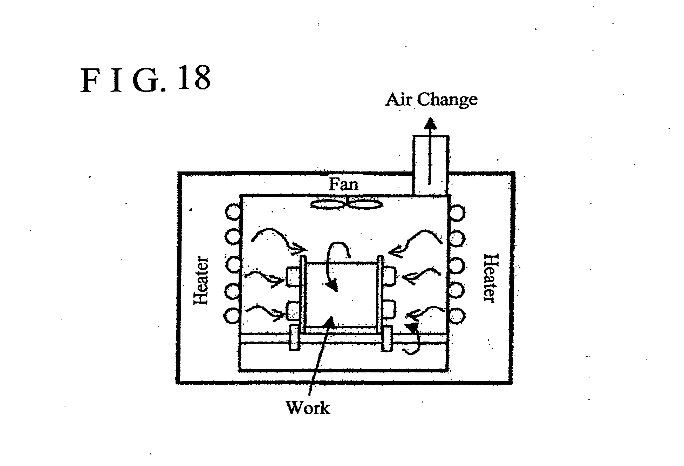

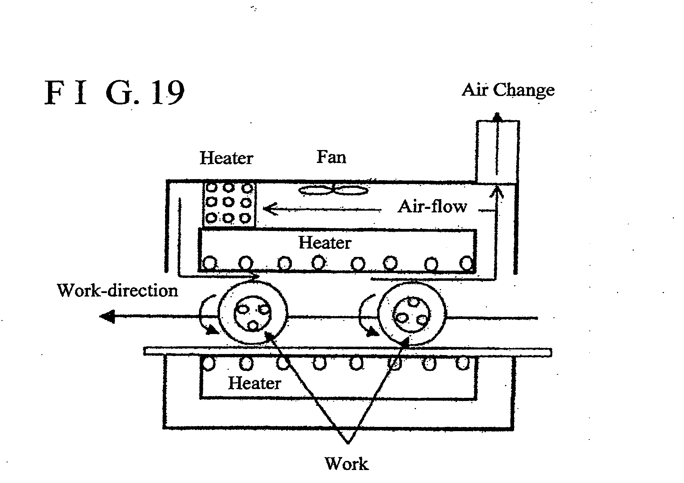

As conventional heat-up methods, methods have been known, according to which an oven is used, as illustrated in Fig. 18, and methods according to which a hot blast-circulating furnace is used, as illustrated in Fig. 19. In the heat-up method involving an oven as illustrated in Fig. 18, a work (represented by a stator already attached with wire-wound coils) is put inside the oven, and is then heated up by heated air while the work is being rotated. Therefore, this heat-up method is considered as a batch type treatment. Further, in the heat-up method involving a hot blast-circulating furnace as illustrated in Fig. 19, while a work is being rotated, the work is made to pass through a tunnel within the furnace, and is then heated up by heated air. This heat-up method with a hot blast-circulating furnace is different from the heat-up method with an oven, in so far that by utilizing this heat-up method, it is possible to perform continuous processing.

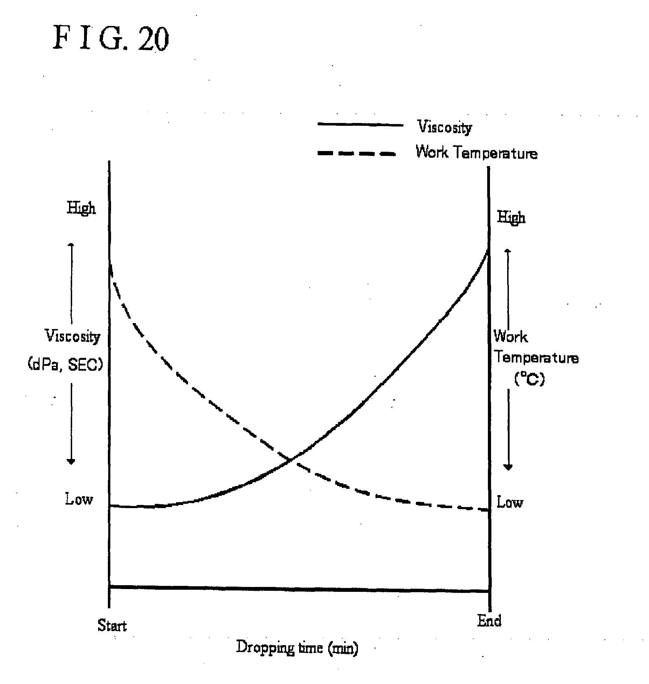

However with the conventional varnish-infiltrating processes, the following issues still remain in question.
(1) An oven, or a hot blast-circulating furnace, is utilized to perform heat-up treatment such as pre-drying and curing. In this heat-up method, heat emanating from a heater warms a work after warming air inside the oven, or inside the hot blast-circulating furnace. Therefore, a long time is required to warm with a degree of certitude the insides of coil ends and the insides of slots, which all correspond to a deep portions of the work. Such a pre-drying process takes 1.5 to 2 hours, which is a considerable period of time. Such a curing process takes 1.5 to 3 hours, which is also a considerable period of time. A total amount of time for performing an entire process thus amounts to 3.5 to 6 hours, which is also a considerable period of time. Moreover, it is necessary to move a work at every process step of the varnish-infiltrating process, thereby impairing working efficiency.
(2) Throughout the entire varnish-infiltrating process, a work is put into, and out of, an oven or a hot blast-circulating furnace, before and after, processes connected with heating up a work, such as from pre-drying to cooling, from a varnish dropping to curing, and from curing to cooling. A jig, a device, and operating time are accordingly all also required for putting the work into, and taking out of, the oven or the furnace, all of which adds up to inefficient operations.
(3) As is illustrated in Fig. 20, at a time that varnish is dropped, the varnish is initially applied to a work that has been maintained at a level of temperature, at which a degree of varnish viscosity (depicted by a solid line in Fig. 20) can be reduced to a minimum. However, when, in response to varnish dropping, the temperature of the work (depicted by a broken line in Fig. 20) is absorbed by the varnish, the temperature of the work drops from a high temperature to a low temperature during the passage of time between the starting and finishing times of varnish-dropping. Simultaneously with these variations in temperature, the degree of varnish viscosity increases from a low level to a high level, and in response to the increase in the degree of varnish viscosity, the permeability of the varnish into spaces between magnet wires is impaired. Therefore, varnish is controlled so as to infiltrate slowly over a period of time (approximately 0.5 hours to 1 hour).
(4) Conventionally, a method has been suggested, by which varnish permeates while electric current is being supplied to motor coils (work). However, when varnish is dropping and permeating while electric current is being supplied to a work, if electric supply lines are rotated directly, electric supply lines become twisted, or get cut off as a result of being wound around a rotational shaft.

Further, there is a technology involving a process of infiltrating varnish into a rotary electric machine is disclosed in Patent Document 1.
Patent Document 1: JP07(1995)-031108A

### DISCLOSURE OF INEVNTION

### OBJECT TO BE SOLVED BY THE INVENTION

In view of the above circumstances, it is an object of the present invention to provide a rotary electric machine-manufacturing apparatus, by means of which, and a method of manufacturing a rotary electric machine, according to which, it is possible to rotate a work while electric current is being supplied to the work, and to enhance working efficiency, in a manner such that, through a series of processes of infiltrating varnish into wire-wound coils and curing the varnish at an event of manufacturing a rotary electric machine, in a condition where the work has been set, pre-drying, varnish dropping, and curing can be continuously performed for a short time.

### MEANS TO SOLVE OBJECT

According to a first aspect of the present invention, a rotary electric machine-manufacturing apparatus utilized to implement a process of infiltrating varnish into wire-wound coils of a rotary electric machine, and of curing the varnish, the apparatus is characterized in including a rotator supporting a work attached with the wire-wound coils and rotating the work; a power supply device supplying electric power to the wire-wound coils; and a varnish-infiltrating device supplying varnish to the wire-wound coils. Electric supply lines connecting the power supply device with the wire-wound coils of the work are linked by a slip ring.

According to a second aspect of the present invention, a rotary electric machine-manufacturing apparatus utilized to implement a process of infiltrating varnish into wire-wound coils of a rotary electric machine, and of curing the varnish, the apparatus is characterized in having a rotator supporting a work attached with the wire-wound coils and rotating the work; a power supply device supplying electric power to the wire-wound coils; and a varnish-infiltrating device supplying varnish to the wire-wound coils. The rotator is a reciprocatingly rotating device that reciprocatingly rotates in a first rotational direction and in an opposite rotational direction.

According to a third aspect of the present invention, a method of manufacturing a rotary electric machine, the method including a process infiltrating a varnish into wire-wound coils of a rotary electric machine, and of curing the varnish is characterized in supplying varnish to wire-wound coils while electric power is being supplied to the wire-wound coils together with continuously rotating a work, which has been attached with the wire-wound coils and has been supported, in a rotational direction.

According to a fourth aspect of the present invention, a method of manufacturing a rotary electric machine, the method including a process infiltrating a varnish into wire-wound coils of a rotary electric machine, and of curing the varnish is characterized in supplying varnish to wire-wound coils while electric power is being supplied to the wire-wound coils together with reciprocating rotation of a work, which has been attached with the wire-wound coils and has been supported, in a first rotational direction and in an opposite rotational direction.

### EFFECT OF THE INVENTION

According to the present invention, because a rotator for rotating a work is provided, rotation of the work at a time of dropping varnish enables to apply varnish uniformly.

Further, by directly supplying electric current to the wire-wound coils, use of self-heating, which occurs from within the wire-wound coils, in combination with induction heating, enables to perform a heat-up processing for pre-drying, curing and so on. Besides, this heating treatment does not require means that surrounds the work. Therefore, the heating treatment can be performed together with varnish dropping-infiltrating treatment.

Still further, the work can be rotated continuously or reciprocatingly while electric current is being supplied to the work. Therefore, it is possible to perfume a varnish-dropping process while a temperature of the work is being maintained at an optimum level by controlling electric power supply.

Still further, because a varnish-infiltrating device is provided, it is possible to implement all kinds of processes of pre-drying, dropping, gelating, and curing, which are contained in a varnish-infiltrating process.

Still further, as is obvious from the first aspect of the present invention, when a slip ring is provided, it is possible to set freely a method of rotating the work and to easily achieve continuous rotation in a rotational direction. As is obvious from the third aspect of the present invention, when the work is continuously rotated, it is possible to obtain an ideal uniform application of varnish.

Still further, as is obvious from the fourth aspect of the present invention, when the work is reciprocatingly rotated, it is possible to uniform applications of varnish at a time of performing a varnish-dropping process and to simplify a pulling condition of electric supply lines.

Still further, when the rotator is a reciprocatingly rotating device, it is preferable that electric supply lines from the power supply device are supported by an electric supply line twist-inhibiting mechanism. In this case, it is possible to avoid disturbances of the electric supply lines, disturbances that may occur due to reciprocating rotation of the reciprocating rotating device.

Still further, it is preferable that a power supply device supplying electric power to the wire wound coils is a high-frequency power supply device which supplies high-frequency electric power of which a frequency is higher than a level of a frequency of a commercial power source.

Especially when a work is a stator of a rotary electric machine, it is possible to achieve each effect described above during the varnish-infiltrating process.

### BRIEF DESCRIPTION OF DRAWINGS

Fig. 1 is a partially sectional side view illustrating a rotary electric machine-manufacturing apparatus according to a first embodiment;
Fig. 2 is a front view illustrating the rotary electric machine-manufacturing apparatus as viewed from an axial end;
Fig. 3 is a block view illustrating a structure of a high-frequency power supply device;
Fig. 4 is a pattern diagram illustrating a heat-up principle by a high-frequency heat, in terms of comparison with a conventional heat-up principle;
Fig. 5 is a partially sectional side view illustrating a rotary electric machine-manufacturing apparatus according to a second embodiment;
Fig. 6A is an explanatory diagram for explaining a structure, and an orientation, of dropping nozzles, as viewed from a work end side, in the case of reciprocating rotation at 360 degrees or more according to a third embodiment;
Fig. 6B is an explanatory diagram for explaining the structure, and the orientation, of the dropping nozzles, as viewed from a work axially cross section, in the case of reciprocating rotation at 360 degrees or more according to the third embodiment;
Fig. 7 is an explanatory diagram for explaining the structure, and the orientation, of the dropping nozzles in the case of reciprocating rotation at 360 degrees or more according to the third embodiment;
Fig. 8 is an explanatory diagram for explaining a structure, and an orientation, of a coater roll-type varnish-supplying means in the case of reciprocating rotation at 360 degrees or more according to the third embodiment;
Fig. 9 is an explanatory diagram for explaining a structure, and an orientation, of the dropping nozzles in the case of reciprocating rotation at 180 degrees or more according to the third embodiment;
Fig. 10A is an explanatory view for explaining an example for applying varnish in the case of reciprocating rotation at 180 degrees according to the third embodiment;
Fig. 10B is an explanatory view for explaining the example for applying varnish in the case of reciprocating rotation at 180 degrees according to the third embodiment;
Fig. 10C is an explanatory view for explaining the example for applying varnish in the case of reciprocating rotation at 180 degrees according to the third embodiment;
Fig. 11 is an explanatory diagram for explaining a structure, and an orientation, of the dropping nozzles in the case of reciprocating rotation at 180 degrees or more according to the third embodiment;
Fig. 12 is an explanatory diagram for explaining a structure, and an orientation, of the dropping nozzles in the case of reciprocating rotation at 180 degrees or more according to the third embodiment;
Fig. 13 is an explanatory diagram for explaining a structure, and an orientation, of the dropping nozzles in the case of reciprocating rotation at 120 degrees or more according to the third embodiment;
Fig. 14A is an explanatory view for explaining an example for applying varnish in the case of reciprocating rotation at 120 degrees according to the third embodiment;
Fig. 14B is an explanatory view for explaining the example for applying varnish in the case of reciprocating rotation at 120 degrees according to the third embodiment;
Fig. 14C is an explanatory view for explaining the example for applying varnish in the case of reciprocating rotation at 120 degrees according to the third embodiment;
Fig. 15 is an explanatory diagram for explaining a structure, and an orientation, of the dropping nozzles in the case of reciprocating rotation at 120 degrees or more according to the third embodiment;
Fig. 16 is an explanatory view for explaining a structure, and an orientation, of the dropping nozzles and the coater roll-type varnish supplying means in the case of reciprocating rotation at 120 degrees or more according to the third embodiment;
Fig. 17 is an explanatory view for explaining a common varnish-infiltrating process;
Fig. 18 is a pattern diagram schematically illustrating a conventional heating process with an oven;
Fig. 19 is a pattern diagram schematically illustrating a conventional heating process with a hot blast-circulating furnace; and
Fig. 20 is a graph for explaining variations in varnish viscosity while varnish is being dropped by a conventional method.

### BEST MODE FOR CARRYING OUT THE INVENTION

As explained above, it is effective if a power supply device according to the present invention supplies high-frequency electric power of which a frequency is higher than a level of a frequency of a commercial power source, as explained above. Herein, a commercial power source is deemed to be a source of electric power at a level of frequency of 50Hz or 60Hz, electric power supplied by an electric power supplier, or another electric power source being comparable to the aforementioned source. Moreover, a commercial three-phase type power source, which emanates three-phase electric power for commercial uses, is deemed to fall into the category of such a commercial power source. In this case, by supplying a high-frequency electric current to a work at a time of a heat-up process such as pre-drying and curing, use of self-heating, which occurs inside coils, in combination with induction heating permits abbreviation of a processing time for pre-drying to a matter of minutes, and a processing time for curing to within one hour. Further, the power supply device of the present invention can be applied to all kinds of processes included in a process of infiltrating a varnish to wire-wound coils of a rotary electric machine and of curing the varnish, processes which are a pre-drying process, a gelating process, according to which the varnish that has been infiltrated is gelated, and a curing process, according to which the varnish is cured or hardened. Especially, it is particularly effective if the power supply device of the present invention were applied to a varnish dropping-infiltrating process, through which a work is preferably rotated.

Further, it is preferable that a work is rotated while supported at a radially inner side thereof. In such circumstances, by supporting the work at the radially inner side thereof, it becomes possible to remove obstacles that surround the work, thereby permitting installation of a varnish-dropping device at an optimum position.

Still further, it is preferable that the reciprocatingly rotating device reciprocatingly repeats rotation of a work at 360 degrees or more in a rotational direction. It is thus possible to minimize the number of varnish-supplying means provided at a varnish-infiltrating device, and thereby downsizing a rotary electric machine-manufacturing apparatus according to the present invention.

Still further, the reciprocatingly rotating device can reciprocatingly repeat rotation of the work at a rotational angle within a rotational angle range of between 180 degrees or more and up to less than 360 degrees in a rotational direction. In this case, it is preferable that the varnish-supplying means of the varnish-infiltrating device are installed at least at two positions every single target portion for the application of varnish to wire-wound coils. Each target portion for the application of varnish to the wire-wound coils is, for example, an outer peripheral surface, or an inner peripheral surface, at each coil end. In this case, the varnish-supplying means can be installed and rotated, so as not to interfere with other components such as coil terminals and connector electric supply lines. Further, even the varnish-supplying means supply varnish to inner peripheral surfaces of coil ends at a coil terminal side, the varnish-supplying means can be installed so as to extend from an outer side of the coils. Especially, when the work is to be supported at the radially inner side thereof, it is possible to prevent varnish from becoming attached to a member supporting the work.

Still further, the reciprocatingly rotating device can also reciprocatingly repeat rotation of a work at a rotational angle within a rotational angle range of between 120 degrees or more and up to less than 180 degrees in a rotational direction. In this case, it is preferable that the varnish-supplying means of the varnish-infiltrating device are installed at least at three positions every single target portion for the application of varnish to the wire wound coils.

As the varnish-supplying means, in addition to a conventional type that drops varnish in a vertical direction from nozzles, for example, an injector-type, which discharges varnish by use of an injector, and a coater roll-type, which transfers and applies varnish from a coater roll that has raised the varnish, can be employed.

### FIRST EMBODIMENT

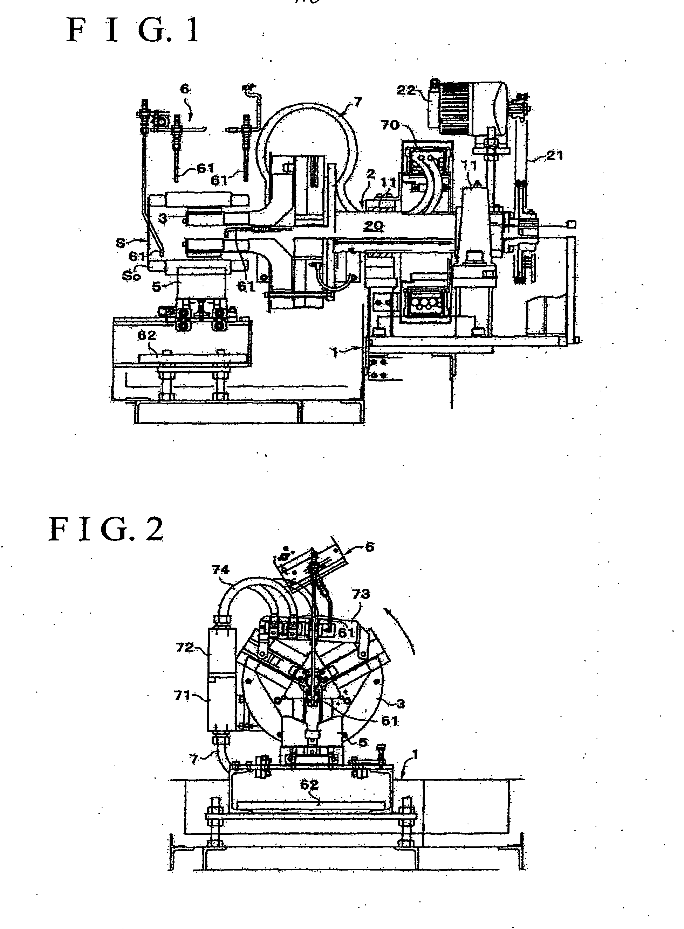

Next, described below is the present invention applied to manufacturing a stator embedded with three-phase coils. Figs. 1 and 2 illustrate a rotary electric machine-manufacturing apparatus according to a first embodiment. As illustrated therein, this apparatus has a structure made up of a rotator 2 on a device table 1, a chuck 3 serving as a work-supporting means attached to the rotator 2, a high-frequency power supply device that is provided separately and is not shown, and a work outer periphery-supporting means 5. A varnish dropping-infiltrating device 6 is positioned and supported by a base frame that is different from the device table 1, and dropping nozzles 61 of the varnish dropping-infiltrating device 6 extend vertically towards a work S.

The rotator 2 is configured with a main shaft 20, of which both ends are freely rotatably supported by bearings 11 at the device table 1, and a motor 22 which is activated to reciprocatingly rotate the main shaft 20 via a transmission mechanism 21 at one side of the main shaft 20. The transmission mechanism 21 according to the first embodiment is configured with a belt transmission mechanism having a timing belt and a pulley. Moreover, in order to avoid disturbances of electric supply lines 7, disturbances which may occur due to reciprocating rotation of the main shaft 20, an electric supply line twist-inhibiting mechanism 70 is positioned between the bearings 11 supporting the main shaft 20. The electric supply line twist-inhibiting mechanism 70 includes a cable bare. The electric supply lines 7 from the power supply device are supported by the electric supply line twist-inhibiting mechanism 70. The chuck 3 is equipped at the other end of the main shaft 20, the chuck 3 which holds the work S from an inner diameter side thereof. When this rotary electric machine-manufacturing apparatus performs a varnish-dropping process, in order to disperse any uneven applications of varnish, which may occur due to the reverse rotation of the rotator 2, a reverse rotational position can be varied arbitrarily by intervals of 10 degrees within a range of 0 - 360 degrees in terms of a reverse rotational angle. The work outer periphery-supporting means 5 is positioned below the work 2. A tray 62, which receives varnish, is provided inside a base frame of the work outer periphery-supporting means 5.

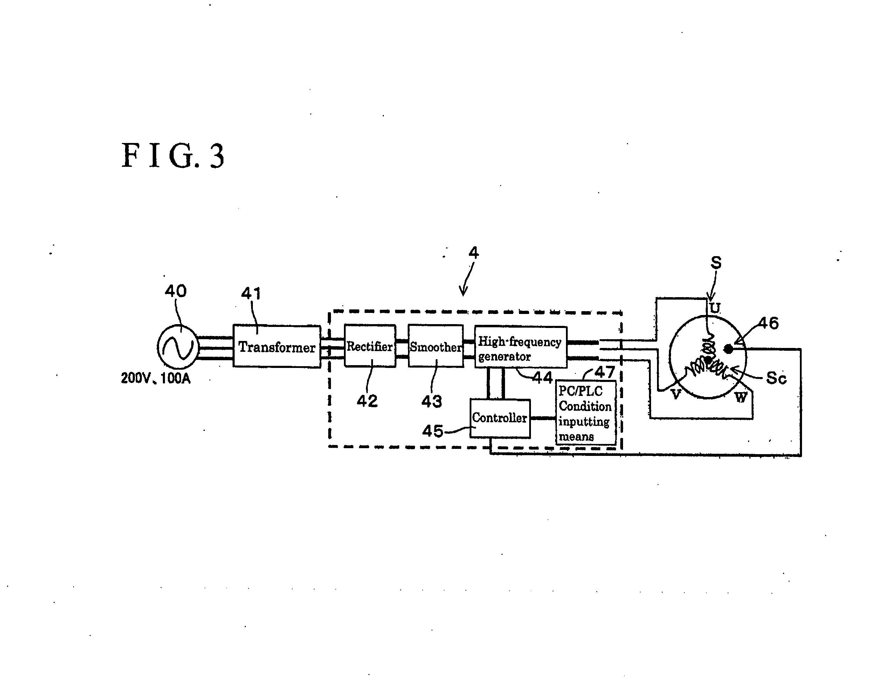

The high-frequency power supply device 4, as is illustrated in Fig. 3, is connected to a commercial three-phase electric power source 40 of 200V via a noise-canceling transformer 41. This type of high-frequency power supply device 4 converts, to a direct electric current, a three-phase electric current that excludes any waveform disturbances resulting from noise canceling. For example, this type of high-frequency power supply device 4 is provided with a rectifier 42 having, for example, a converter, a smoother 43 having, for example, a condenser, and a high-frequency generator 44 having, for example, an inverter. The smoother 43 is employed for the purpose of smoothing a pulsating flow rectified by the rectifier 42. The high-frequency generator 44 converts, to a high-frequency electric current at a single-phase frequency level of approximately 20kHz, the direct electric current smoothed by the smoother 43. This high-frequency generator 44 is controlled by a controller 45, which is connected to, for example, a temperature information obtaining means 46, and a condition inputting means 47 that inputs heat-up conditions, in a manner such that temperature information and controlling conditions are input into the controller 45. The temperature information obtaining means 46 has, as a detecting element, a thermistor embedded in wire-wound coils Sc. In Fig. 3, the reference "S" refers to, as a work S that is an object of processing, a stator in which the wire-wound coils Sc have been inserted.

With further reference to Figs. 1 and 2, the high frequency power supply device 4 and the wire-wound coils Sc of the work S can be connected to each other via the electric supply lines 7. More specifically, the chuck 3 supports a three-phase connector 71 of the three electric supply lines 7 from the high-frequency power supply device 4. A wire connecting means provided with a connector 72 fitted into the connector 71 can be attached to the chuck 3. This wire connecting means is configured with a terminal table 73 having three-phase junction terminals. This terminal table 73 includes a reverse C-shaped mounting bracket, and the three-phase junction terminals that are made from electric conductors fixedly mounted on the mounting bracket via an insulating material. The mounting bracket possesses boltholes at its leg portions, boltholes that are employed so as to attach to the chuck 3. Each junction terminal is connected, via electric leads 74, to the connector 72 on the terminal table 73 side. Each junction terminal is provided with a connecting portion that is freely attached to, and detached from, each lead terminal of each wire-wound coil.

Next, described below is a specific method of implementing, by use of this rotary electric machine-manufacturing apparatus, each process step in the varnish-infiltrating process. Prior to implementing these processes, the work S is set at the rotator 2 in a condition where the work S is being held by the chuck 3, and the lead terminals (U-phase, V-phase, and W-phase) of the wire-wound coils Sc are connected to the three-phase junction terminals of the terminal table 73. Then, the connector 72 of the electric leads 74 extending from the terminal table 73 is inserted into the connector 71 at the chuck 3 side. Preparation for implementing the following processes is completed as described above. This process preparation can be equally applied to all processes described later.

In the first place, in order to implement a pre-drying process, a heat treatment is performed by operating only the high-frequency power supply device 4. In this case, a high-frequency electric current output side of the high-frequency power supply device 4 is connected to the wire-wound coils Sc of the work S set at the table 1 by the chuck 3. Electric power is then supplied in order of a U-V phase, a V-W phase, and a W-U phase. In response to this electric power supply to the wire-wound coils Sc, the work S can generate heat internally, as a result of self-heating internally generated, and of induction-heating. Therefore, it is possible to release residual stress that occurred when the wire-wound coils Sc were wound with wires and inserted into slots, and also to evaporate moisture contained in the work S.

In the next place, in order to implement a varnish dropping-infiltrating process, a heat treatment and a dropping-infiltrating treatment are performed simultaneously by operating both the rotator 2 and the varnish dropping-infiltrating device 6 at the same time as operating the high-frequency power supply device 4. In this case, by operating the high-frequency power supply device 4, the work S is maintained, by means of electric power supply that is identical to that described above, at a level of temperature where varnish viscosity can be optimized. In such circumstances, by rotating the work S in response to operation of the rotator 2, because an optimum temperature can be maintained, varnish that drops from each nozzle 61 of the varnish dropping-infiltrating device 6 can possess an optimum flowability, and can accordingly infiltrate equally into deep portions of the work S. Therefore, it is possible to apply varnish to the work S uniformly.

When a curing process is implemented following the varnish dropping-infiltrating process, a heat treatment is performed by operating the rotator 2 at the same time as operating the high-frequency power supply device 4. In this case, by operating the high-frequency power supply device 4, the work S is maintained, by means of an electric power supply that is identical to that described above, at an optimum level of temperature at which varnish can be cured. In such circumstances, by rotating the work S in response to operation of the rotator 2, the varnish applied to the work S can be protected from the occurrence of deflection in favor of flowability of varnish that has initially been cured, and then can make progress in being cured. Therefore, it is in the end possible to obtain an evenly cured condition of the varnish.

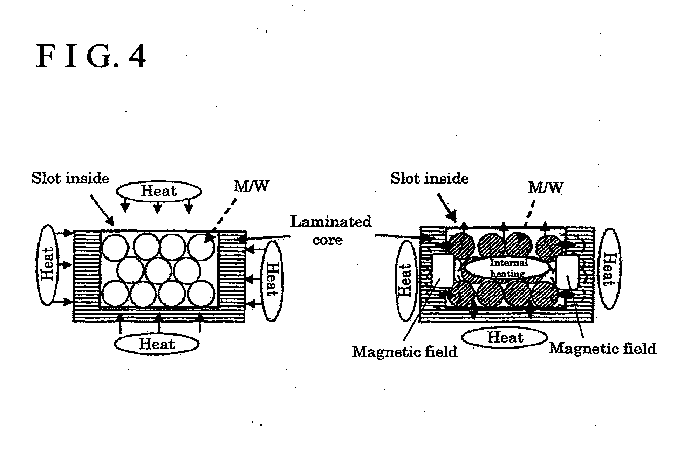

Fig. 4 illustrates a heat-up principle in which a high frequency is used, in terms of a comparison with a conventional heat-up principle. Fig. 4 is a pattern diagram illustrating a cross section of a laminated core slot of the work S. According to the conventional heat-up principle, by use of an oven, illustrated at the left side in Fig. 4, heat emanating from a heater is aerially transmitted to the work S. In this case, because the temperature of the work S is gradually increased from the exterior, a long curing time is required. On the other hand, according to the heat-up principle based on a high frequency according to the present invention, a high-frequency electric current is supplied to magnet wires M/W inside the slots. In this case, self-heating of the magnet wires M/W occurs due to electric resistance thereof. Further, a magnetic field is generated as a result of electric current supplied to the magnet wires M/W. Over current is then generated at the core and the core itself thus generates heat. Therefore, because the work S itself generates heat, it is possible to cure the varnish applied to the insides of the slots for an abbreviated curing time.

As is apparent from the above-described processes, the heat-up process with the apparatus of the present invention can be achieved only by connecting the high-frequency power supply device 4 with the work S, thus eliminating the need for devices surrounding the work S. In such a manner, the device 6 for dropping varnish can be arranged at an optimum position. Moreover, in the conventional heat-up process with an oven or a hot blast-circulating furnace, a process for dropping varnish onto the work S was needed to change a stage. However, according to the heat-up process of the present invention, all processes from pre-drying to curing can be performed at a single stage. Moreover, by supplying a high-frequency electric current to the work S while the work S is being rotated, the coil can be heated up. Therefore, the thermistor 46 embedded in the coils can sense the temperature and feedback information of their temperatures to the high-frequency power supply device 4. By controlling the amount of electric current to be supplied and the time spent on electric excitation, it is therefore possible, to maintain a temperature level of the coils at appropriate levels. As a result, when a heat-up treatment is performed at a time of dropping the varnish to the work S, fluctuations in the temperature of the work S can be restrained, and fluctuations in varnish viscosity can be also restrained. By maintaining a degree of varnish viscosity that is optimum for varnish dropping, it is therefore possible to make smooth the infiltration of the varnish into spaces between magnet wires, and also to abbreviate a required time.

As described above, according to the first embodiment of the present invention, by directly supplying a high-frequency electric current to the wire-wound coils Sc, use of self-heating, which occurs from within the wire-wound coils Sc, in combination with induction heating enables to shorten a heat-up processing time for pre-drying, gelating, and curing to a short period (approximately 0.5 to 1 hour). Further, large-scale devices, such as an oven and a heat blast-circulating furnace, as devices for heating up the wire-wound coils Sc, are not needed. Therefore, it is possible to downsize the apparatus by having only the high-frequency power supply device 4. Still further, even if defective products are produced, because the processing time is short, processing results can be found in a short time. Therefore, it is possible to find defective products at an early stage, and to minimize losses. Still further, by monitoring, by use of the thermistor 46 embedded in the wire-wound coils Sc, the temperatures of the wire-wound coils Sc or resistances that vary in response to temperatures, and by controlling such temperatures, it is possible to cure the varnish with high reliability and to stabilize a quality.

The temperature information obtaining means 46 is not limited to the thermistor, and other elements such as a non-contact type heat gauge, a thermocouple or a thermo-tracer can also be applied. Further, when a magnetic material such as an iron is utilized to form the chuck 3 supporting the work S, the chuck 3 becomes heated due to induction heating. In this case, the high level of heat of the chuck 3 is transmitted to the wire-wound coils Sc, thereby causing fluctuations in temperatures. Accordingly, in order to inhibit generation of heat by the chuck 3, it is desirable that the chuck 3 is made of a material such as aluminum, copper or ceramics, all of which possess characteristics of high conductivity. In this case, there is no need to worry about the occurrence of fluctuations in temperatures of the coils.

### SECOND EMBODIMENT

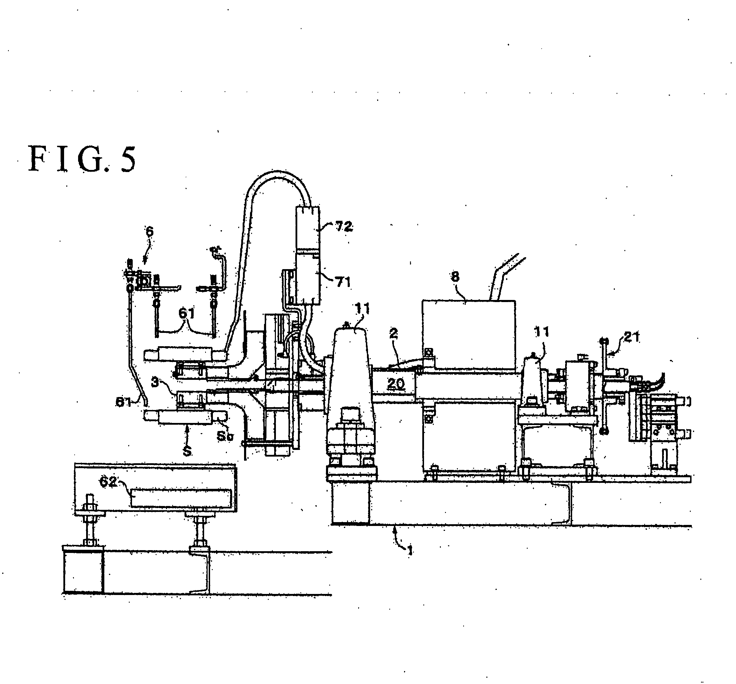

Fig. 5 illustrates a rotary electric machine-manufacturing apparatus according to a second embodiment. This apparatus is essentially the same as in the first embodiment, apart from the rotator 2. Portions corresponding to the first embodiment are then denoted with the same reference numerals, and only different points are explained below. In this apparatus, a continuously rotating device is employed as the rotator 2. Because a rotation activating mechanism is identical to that in the above description, Fig. 4 illustrates only a pulley at a driven side of the transmission mechanism 21, and illustrations of related mechanisms including a motor are omitted. As a result of employing this continuously rotating device, a slip ring 8 is disposed halfway on the electric supply lines connecting the non-illustrated high-frequency power supply device with the wire-wound coils Sc of the work S. The slip ring 8 is employed so as to continuously supply and receive, by slidable movement at a relatively rotating portion, electric current between a stationary side and a rotating side. This slip ring 8 is located between the bearings 11 supporting the main shaft 20. This slip ring 8 includes a three-set ring for electrically exciting the three-phase type wire-wound coils Sc of the work S, and another ring for sending to the high-frequency power supply equipment, by a feed-back method, signals outputted by the thermistor 46 embedded in the wire-wound coils of the work S in such a manner that electric power to be supplied can be controlled.

A specific method of implementing, by use of this apparatus, each process step in the varnish-infiltrating process is identical to the method according to the first embodiment, and a description thereof is omitted herein.

According to the second embodiment, the pulling amount of the electric supply lines 7 does not require an extra for a reverse rotation, and a cable bare, so that the pulling amount of the electric supply lines 7 can be minimized. Further, a structure of this apparatus becomes slightly complicated by a locating amount of the slip ring 8. However, when the varnish dropping-infiltrating process is implemented, an advantage can be secured, by always rotating the work S in a rotational direction, that the varnish can be applied to the work S further uniformly. Further, in contrast with a method of oscillating the work S according to the first embodiment, control of a reverse rotational position is not necessary. Therefore, controlling operations, of the high-frequency power supply device 4, and of a motor of the rotator 2 can be simplified. Other effects produced by the second embodiment are the same as effects produced in the first embodiment.

### THIRD EMBODIMENT

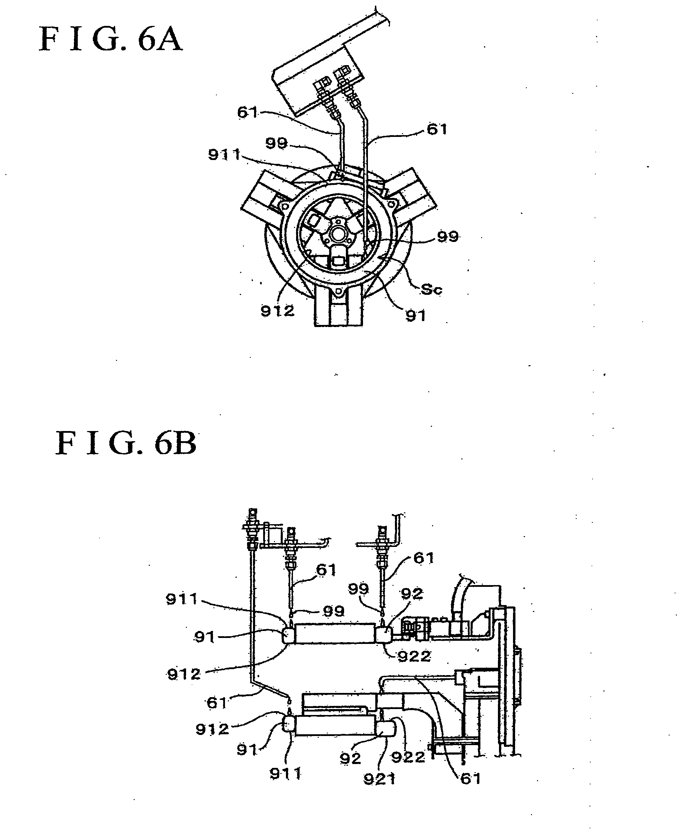

A third embodiment features modified examples in connection with the reciprocating rotational angle of the rotator 2 according to the first embodiment, and with a structure to locate the dropping nozzles 61 for supplying a varnish 99. First of all, Figs. 6, 7 and 8 illustrate an example in which a reciprocatingly rotating device, which reciprocatingly rotates every 360 degrees, is employed as the rotator 2.

Fig. 6 illustrates an example, in which the dropping nozzles 61 for dropping the varnish 99 downwards vertically are respectively allocated at one position every single target portion for application of varnish to the wire wound-coils, an arrangement which is identical to that of the first embodiment. That is, as illustrated in Fig. 6, the single dropping nozzle 61 is allocated to each outer peripheral surface 911 and 921 of each coil end 91 and 92 of the wire-wound coils Sc. Likewise, the single dropping nozzle 61 is allocated to each inner peripheral surface 912 and 922 of each coil end 91 and 92 of the wire-wound coils Sc. In this case, by dropping the varnish 99 from the dropping nozzles 61 while the wire-wound coils Sc, as the work S, are being rotated in a reciprocating manner every 360 degrees, it is possible to supply the varnish 99 uniformly onto the outer peripheral surfaces 912 and 921 and the inner peripheral surfaces 912 and 922, of the coil ends 91 and 92.

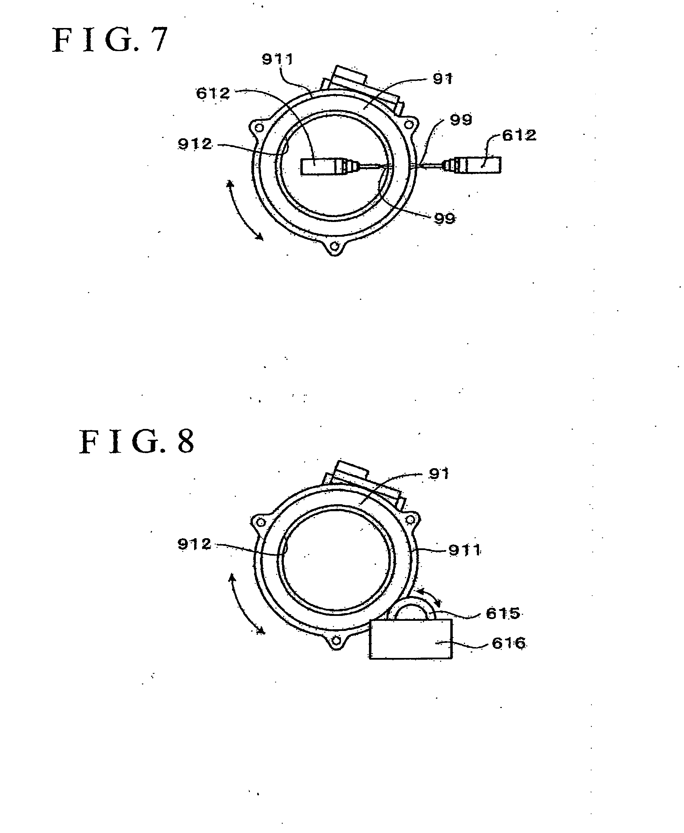

Fig. 7 illustrates an example, in which injector-type dropping nozzles 612 for spraying the varnish 99 are allocated at one position every single target portion for application of varnish to the wire wound-coils. In Figs. 7, and 8 to 16, in order to facilitate understanding of illustrations therein, each figure represents a view that essentially illustrates only the work S and the dropping nozzles. According to this example illustrated in Fig. 7, irrespective of the direction for dropping the varnish 99, a direction that is determined by gravity, the dropping nozzles 612 can be allocated at appropriate positions, thereby enhancing freedom of the structure of the rotary electric machine-manufacturing apparatus.

Fig. 8 illustrates an example, in which the varnish 99 is applied to the outer peripheral surfaces of the coil ends 91 and 92 by means of roll coating. In this case, a varnish-infiltrating device, which includes a tray 616 in which the varnish 99 is accumulated, and a coater roll 615 for raising the varnish 99 accumulated in the tray 616. In this case, commensurately with a width of the coater roll 615, it is accordingly possible to adjust accurately the area to which the varnish is applied, and thus enhance a degree in the application of varnish.

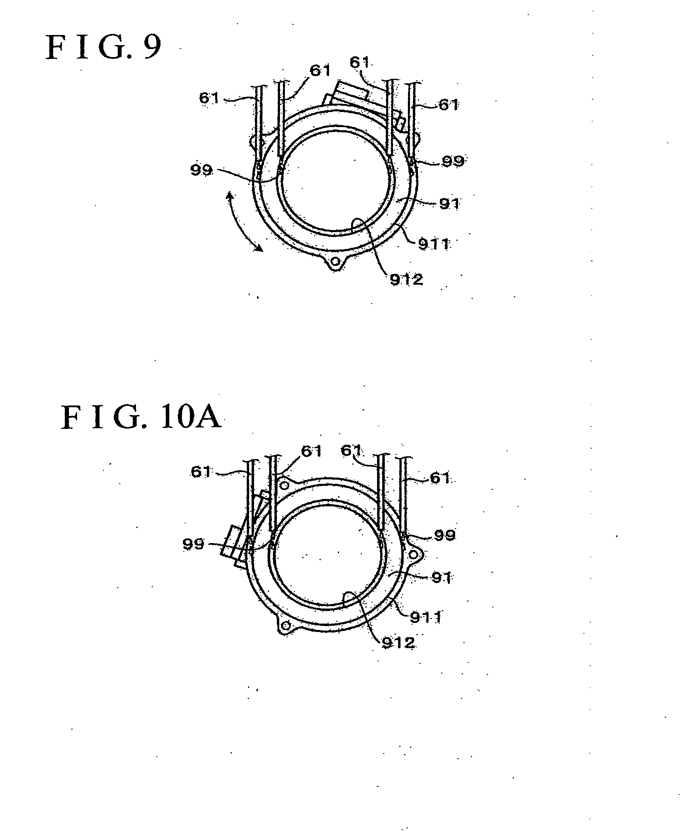

Figs. 9 to 12 illustrates examples, in which a reciprocating rotation device is employed as the rotator 2, which reciprocatingly rotates every rotational angle within a rotational angle range of between 180 degrees or more and up to less than 360 degrees.

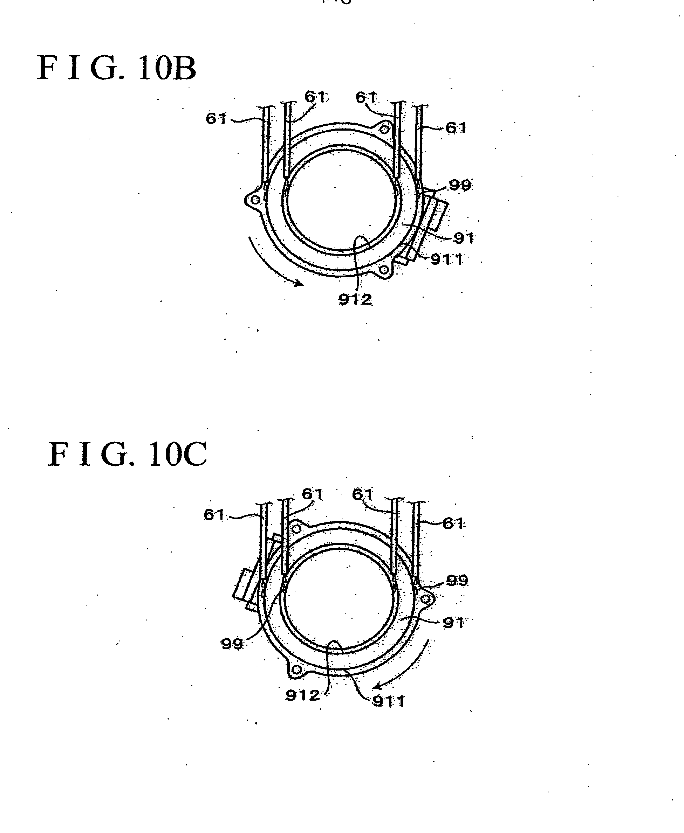

Fig. 9 illustrates an example, in which the dropping nozzles 61 for dropping the varnish 99 downwards vertically are respectively allocated at two positions every single target portion for application of varnish to the wire wound-coils. That is, the two dropping nozzles 61 are allocated, at positions separated by about 180 degrees, each outer peripheral surface 911 of the coil end 91 and outer peripheral surface 921 of the coil end 92. Likewise, the two dropping nozzles 61 are allocated, at positions separated by about 180 degrees, each inner peripheral surface 912 of the coil end 91 and outer peripheral surface 922 of the coil end 92.In this case, as illustrated in Fig. 10, while the wire-wound coils Sc as the work S is reciprocatingly being rotated approximately every about 180 degrees, the dropping nozzles 61 drop the varnish 99. That is, by rotating the wire-wound coils Sc at about 180 degrees in a first rotational direction (counter-clockwise direction) ((a) → (b)), and then rotating them at about 180 degrees in an opposite rotational direction (clockwise direction) ((b) → (c)), it is possible to supply the varnish 99 uniformly to the outer peripheral surfaces 912 and 921 and the inner peripheral surfaces 912 and 922, of the coil ends 91 and 92.

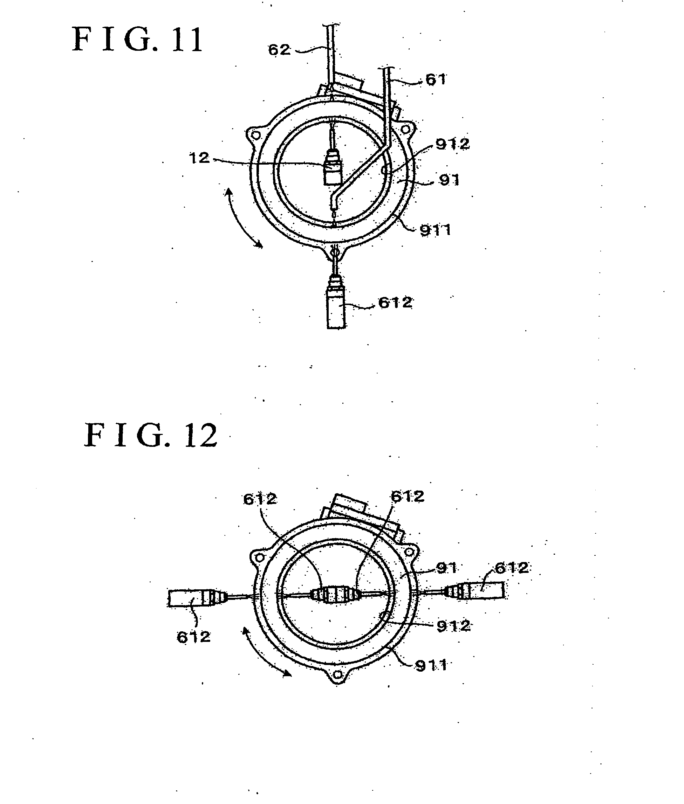

Fig. 11 illustrates an example, in which injector-type dropping nozzles 612 are employed in combination with the normal dropping nozzles 61. More specifically, as is illustrated therein, in term of the nozzles for applying the varnish onto the outer peripheral surfaces 911 and 921 of the coil ends 91 and 92, the dropping nozzles 61, each of which faces a vertically top portion of the work S, are utilized in combination with the injector-type dropping nozzles 612, each of which faces a vertically bottom portion of the work S. In terms of the nozzles for applying the varnish onto the inner peripheral surfaces 912 and 9222 of the coil ends 91 and 92, the dropping nozzles 61, each of which faces a vertically bottom portion of the work S, are utilized in combination with the injector-type dropping nozzles 612, each of which faces a vertically top portion of the work S. In this case, it is possible to supply the varnish 99 vertically from the front relative to the outer peripheral surfaces 911 and 921 of the coil ends 91 and 92, or to the inner peripheral surfaces 912 and 922 thereof, thereby further enhancing a degree of precision in applying varnish.

Fig. 12 illustrates an example, in which two nozzles, which make a pair, are all the injector-type dropping nozzles 612. In this case, irrespective of the direction for dropping the varnish 99, a direction that is determined by gravity, the dropping nozzles 612 can be allocated at appropriate positions, thereby enhancing freedom of the structure of the rotary electric machine-manufacturing apparatus.

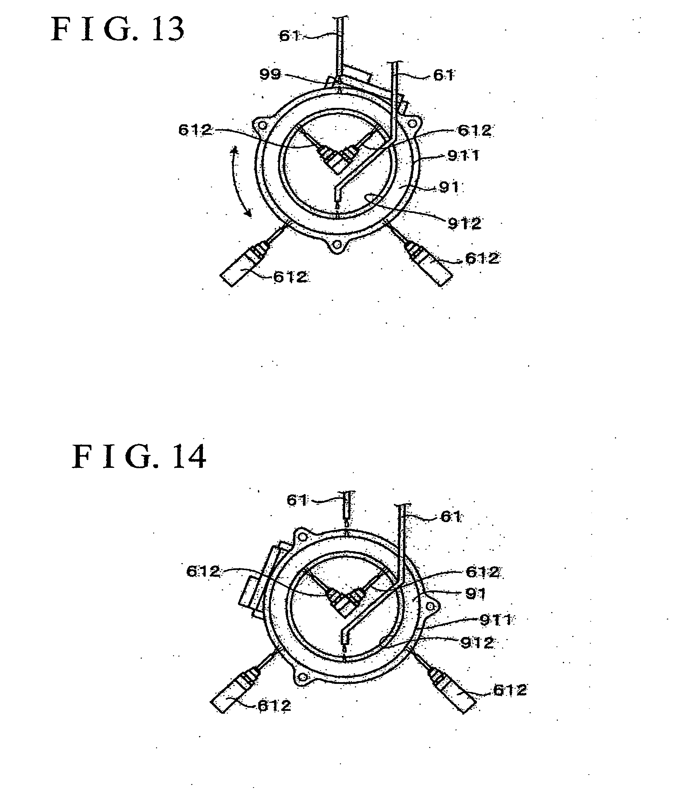

Next, Figs. 13 through 16 illustrate an example in which a reciprocatingly rotating device is employed as the rotator 2, which reciprocatingly rotates every rotational angle within a rotational angle range of between 120 degrees or more and up to less than 180 degrees.

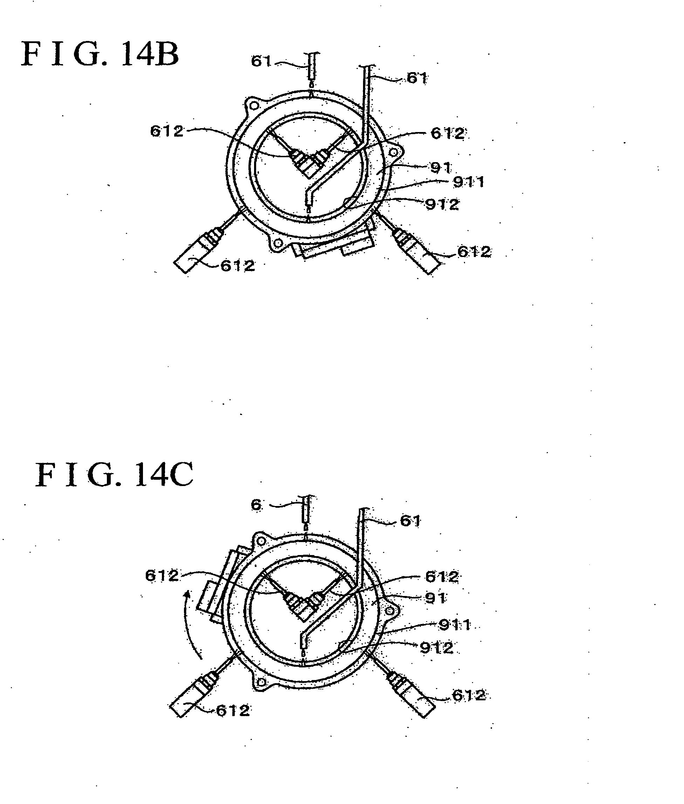

Fig. 13 illustrates an example, in which a pair, which includes a combination of the single dropping nozzle 61 for dropping the varnish 99 downwards vertically and the two injector-type dropping nozzles 612, is utilized every single target portion for application of varnish to the wire wound-coils Sc. The singular dropping nozzle 61 and the two injector-type dropping nozzles 612 are allocated, at positions separated by about 120 degrees, every single target portion for application of varnish to the wire-wound coils Sc. That is, in terms of each outer peripheral surface 911 and 921 of each coil end 91 and 92, the single dropping nozzle 61 is allocated at the vertically top portion of the work S, and the two injector-type dropping nozzles 612 are allocated respectively at positions separated at about 120 degrees from the vertically top portion. In terms of each inner peripheral surface 912 and 922 of each coil end 91 and 92, the singular dropping nozzle 61 is allocated at the vertically bottom portion of the work S, and the two injector-type dropping nozzles 612 are allocated respectively at positions separated at about 120 degrees from the vertically bottom portion. In this case, as illustrated in Fig. 14, while the wire-wound coils Sc as the work S is reciprocatingly being rotated approximately every about 120 degrees, the dropping nozzle 61 drops the varnish 99 and the dropping nozzles 612 spray the varnish 99. That is, by rotating by rotating the wire-wound coils Sc at about 120 degrees in a first rotational direction (counter-clockwise direction) ((a) → (b)), and then rotating them at about 120 degrees in an opposite rotational direction (clockwise direction) ((b) → (c)), it is possible to supply the varnish 99 uniformly to the outer peripheral surfaces 912 and 921 and the inner peripheral surfaces 912 and 922, of the coil ends 91 and 92.

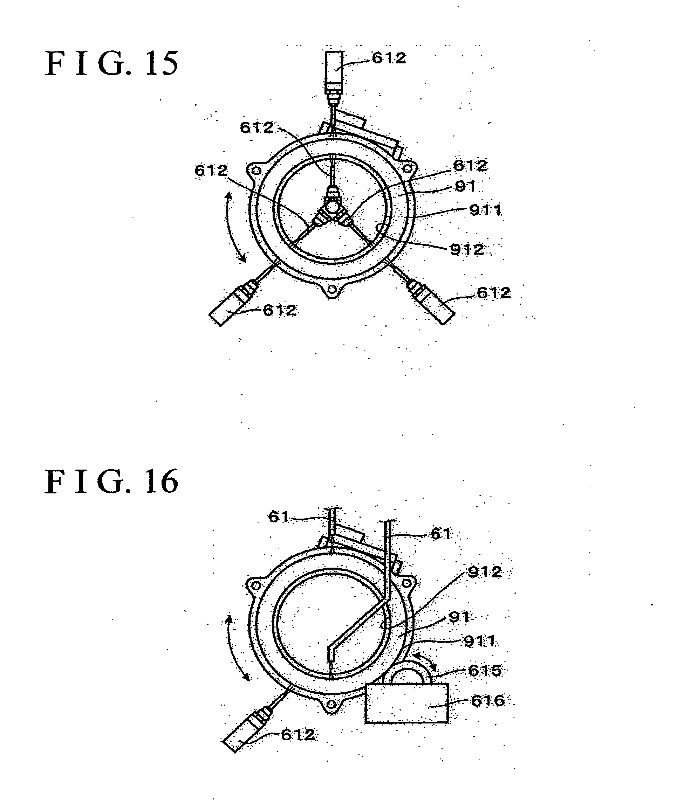

Fig. 15 illustrates an example, in which a pair, which includes the three injector-type dropping nozzles 612, is utilized every single target portion for application of varnish to the wire wound-coils Sc. In this case, irrespective of the direction for dropping the varnish 99, a direction that is determined by gravity, the dropping nozzles 612 can be allocated at appropriate positions, thereby enhancing freedom of the structure of the rotary electric machine-manufacturing apparatus.

Fig. 16 illustrates an example, in which a pair, which includes a combination of the singular dropping nozzle 61 for dropping the varnish 99 downwards vertically, the singular injector-type dropping nozzle 612 and a singular coater roll 615 for roll-coating, is utilized every single target portion for application of varnish to the wire-wound coils Sc. The singular dropping nozzle 61, the singular injector-type dropping nozzle 612 and the singular coater roll 615 are allocated, at positions separated by about 120 degrees, every single target portion for application of varnish to the wire-wound coils Sc. That is, in terms of each outer peripheral surface 911 and 921 of each coil end 91 and 92, the single dropping nozzle 61 is allocated at the vertically top portion of the work S, and the injector-type dropping nozzles 612 and the coater roll 615 are allocated respectively at positions separated at about 120 degrees from the vertically top portion. In terms of each inner peripheral surface 912 and 922 of each coil end 91 and 92, the singular dropping nozzle 61 is allocated at the vertically bottom portion of the work S, and the injector-type dropping nozzles 612 and the coater roll 615 are allocated respectively at positions separated at about 120 degrees from the vertically bottom portion. In this case, it is also possible to supply the varnish 99 uniformly to the outer peripheral surfaces 912 and 921 and the inner peripheral surfaces 912 and 922, of the coil ends 91 and 92.

### INDUSTRIALLY AVAILABILITY

The present invention can be widely applied to manufacturing a stator, or a rotor, of a common multiple-phase rotary electric machine. For example, the present invention can be applied to each process step in a process of infiltrating varnish into three-phase coils, of a three-phase induction motor or generator.

## Claims

1. A rotary electric machine-manufacturing apparatus utilized to implement a process of infiltrating varnish into wire-wound coils of a rotary electric machine, and of curing the varnish, the apparatus **characterized in** comprising:
a rotator supporting a work attached with the wire-wound coils and rotating the work;
a power supply device supplying electric power to the wire-wound coils; and
a varnish-infiltrating device supplying varnish to the wire-wound coils,
wherein electric supply lines connecting the power supply device with the wire-wound coils of the work are linked by a slip ring.

2. The rotary electric machine-manufacturing apparatus according to claim 1, wherein the rotator is a continuously rotating device that rotates continuously in a rotational direction.

3. A rotary electric machine-manufacturing apparatus utilized to implement a process of infiltrating varnish into wire-wound coils of a rotary electric machine, and of curing the varnish, the apparatus **characterized in** comprising:
a rotator supporting a work attached with the wire-wound coils and rotating the work;
a power supply device supplying electric power to the wire-wound coils; and
a varnish-infiltrating device supplying varnish to the wire-wound coils,
wherein the rotator is a reciprocatingly rotating device which reciprocatingly rotates in a first rotational direction and in an opposite rotational direction.

4. The rotary electric machine-manufacturing apparatus according to claim 3, wherein electric supply lines from the power supply device are supported by an electric supply line twist-inhibiting mechanism.

5. The rotary electric machine-manufacturing apparatus according to claim 3 or 4, wherein the reciprocatingly rotating device is structured so as to reciprocatingly repeat rotation at 360 degrees or more in a rotational direction.

6. The rotary electric machine-manufacturing apparatus according to claim 3 or 4, wherein the reciprocatingly rotating device is structured so as to reciprocatingly repeat rotation at a rotational angle within a rotational angle range of between 180 degrees or more and up to less than 360 degrees in a rotational direction, and wherein the varnish-infiltrating device includes varnish-supplying means at least at two positions every single target portion for application of varnish to the wire-wound coils.

7. The rotary electric machine-manufacturing apparatus according to claim 3 or 4, wherein the reciprocatingly rotating device is structured so as to reciprocatingly repeat rotation at a rotational angle within a rotational angle range of between 120 degrees or more and up to less than 180 degrees in a rotational direction, and wherein the varnish-infiltrating device includes varnish-supplying means at least at three positions every single target portion for application of varnish to the wire-wound coils.

8. The rotary electric machine-manufacturing apparatus according to claim 6 or 7, wherein at least one of the varnish-supplying means is structured so as to discharge varnish by means of an injector.

9. The rotary electric machine-manufacturing apparatus according to any one of claims 6, 7 and 8, wherein at least one of the varnish-supplying means is structured so as to supply the varnish by transferring and applying varnish raised by a coater roll.

10. The rotary electric machine-manufacturing apparatus according to any one of claims 1 through 9, wherein the rotator is structured so as to support the work from a radially inner side thereof.

11. The rotary electric machine-manufacturing apparatus according to any one of claims 1 through 10, wherein the power supply device is a high-frequency power supply device emanating electric power of which a frequency is higher than a level of a frequency of a commercial power source.

12. The rotary electric machine-manufacturing apparatus according to any one of claims 1 through 11, wherein the work is a stator of a rotary electric machine.

13. A method of manufacturing a rotary electric machine, the method including a process infiltrating a varnish into wire-wound coils of a rotary electric machine, and of curing the varnish **characterized in** comprising the steps of:
supporting a work attached with wire-wound coils;
continuously rotating the work in a rotational direction;
supplying electric power to the wire-wound coils while the work is being continuously rotated; and
supplying varnish to the wire-wound coils while electric power is being supplied to the wire-wound coils.

14. A method of manufacturing a rotary electric machine, the method including a process infiltrating a varnish into wire-wound coils of a rotary electric machine, and of curing the varnish **characterized in** comprising the steps of:
supporting a work attached with wire-wound coils;
rotating the work reciprocatingly in a first rotational direction and in an opposite rotational direction;
supplying electric power to the wire-wound coils while the work is being rotated reciprocatingly in the first rotational direction and in the opposite rotational direction; and
supplying varnish to the wire-wound coils while electric power is being supplied to the wire-wound coils.

15. The method of manufacturing a rotary electric machine according to claim 14, wherein the reciprocating rotation is performed by reciprocatingly repeating rotation at 360 degrees or more in a rotational direction.

16. The method of manufacturing a rotary electric machine according to claim 14, wherein the reciprocating rotation is performed by reciprocatingly repeating rotation at a rotational angle within a rotational angle range of between 180 degrees or more and up to less than 360 degrees in a rotational direction, and wherein the supply of the varnish to the wire-wound coils is performed simultaneously by varnish-supplying means installed at least at two positions every single target portion for application of varnish to the wire-wound coils.

17. The method of manufacturing a rotary electric machine according to claim 14, wherein the reciprocating rotation is performed by reciprocatingly repeating rotation at a rotational angle within a rotational angle range of between 120 degrees or more and up to less than 180 degrees in a rotational direction, and wherein the supply of the varnish to the wire-wound coils is performed simultaneously by varnish-supplying means installed at least at three positions every single target portion for application of varnish to the wire-wound coils.

18. The method of manufacturing a rotary electric machine according to claim 16 or 17,
wherein at least one of the varnish-supplying means is structured so as to discharge varnish by means of an injector.

19. The method of manufacturing a rotary electric machine according to any one of claims 16, 17 and 18, wherein at least one of the varnish-supplying means is structured so as to supply the varnish by transferring and applying varnish raised by a coater roll.

20. The method of manufacturing a rotary electric machine according to any one of claims 13 through 19, wherein the rotation of the work is performed in a condition where the work is being supported from a radially inner side thereof.

21. The method of manufacturing a rotary electric machine according to any one of claims 13 through 20, wherein the electric power supplied to the wire-wound coils is electric power of which a frequency is higher than a level of a frequency of a commercial power source.

22. The method of manufacturing a rotary electric machine according to any one of claims 13 through 21, wherein the work is a stator of a rotary electric machine.
